# EUROPÄISCHE PATENTSCHRIFT

(11) **EP 1 792 809 B1**
(45) Veröffentlichungstag und Bekanntmachung des Hinweises auf die Patenterteilung: **25.03.2009**
(21) Anmeldenummer: 06024791.3
(22) Anmeldetag: 30.11.2006
(51) Int. Cl.: B62D 35/00

(54) **Nutzfahrzeuge mit einem den Hauptspoiler überlappenden Vorspoiler**
Utility vehicle with a front spoiler which overlaps the main spoiler
Véhicule utilitaire avec un déflecteur aérodynamique avant qui chevauche le déflecteur principal

(30) Priorität: 02.12.2005 DE 102005057633
(43) Veröffentlichungstag der Anmeldung: 06.06.2007
(73) Patentinhaber: MAN Nutzfahrzeuge Aktiengesellschaft, 80976 München (DE)
(72) Erfinder: Mederle, Günther, 85051 Ingolstadt (DE); Kneifel, Eberhard, 89250 Senden (DE); Kopp, Stephan, 83623 Dietramszell (DE)

(56) Entgegenhaltungen:
- DE-A1- 10 229 840
- DE-C1- 19 609 049
- GB-A- 2 023 519

## Beschreibung

### Stand der Technik

Die Erfindung betrifft ein Nutzfahrzeug mit einem Fahrerhaus, in dessen Dach eine Dachluke vorgesehen ist, mit einer sich vom Dach aus nach oben und hinten schräg erstreckenden Luftleiteinrichtung zur strömungsgünstigen Anströmung eines hinter dem Fahrerhaus angeordneten Aufbaus oder Aufliegers, wobei die Luftleiteinrichtung mit einer Aussparung für die Dachluke versehen ist, sowie mit einer weiteren Luftleiteinrichtung, die in Fahrtrichtung vor der Dachluke auf dem Dach angeordnet ist, gemäß dem Oberbegriff von Anspruch 1.

Nutzfahrzeuge werden zur Verringerung des Luftwiderstands mit Luftleiteinrichtungen oder Dachspoilern versehen. Diese sollen den Zwischenraum zwischen der Dachoberfläche des Führerhauses und dem zumeist höheren Aufbau des Nutzfahrzeugs bzw. dem höheren Auflieger im Falle einer Zugfahrzeug-Anhängerkombination in der Weise überbrücken, dass die Luftströmung nicht abreißt bzw. es nicht zu allzu großen Verwirbelungen kommt. Solche Dachspoiler oder Luftleitflügel sind zur Anpassung an unterschiedliche Höhen des Aufbaus bzw. des Aufliegers oft höhenverstellbar.

Ein Nutzfahrzeug mit gattungsgemäßen Luftleiteinrichtungen ist aus der DE 196 09 049 C1 bekannt. Die dort offenbarte weitere Luftieiteinrichtung in Form eines kurzen, der einen Luftleiteinrichtung vorgeordneten Luftleitflügels soll eine Unterströmung der einen Luftleiteinrichtung aufgrund von durch die Aussparung hindurchströmenden Teilströmen des Fahrtwindes vermeiden. Weiterhin soll durch diese Maßnahme auch ein zugfreies Öffnen und Schließen der Dachluke auch während des Fahrbetriebs möglich sein.

Der vorliegenden Erfindung liegt demgegenüber die Aufgabe zugrunde, ein Nutzfahrzeug der eingangs erwähnten Art derart weiter zu entwickeln, dass durch die weitere Luftleiteinrichtung eine verbesserte Aerodynamik bei gleichzeitig erweiterter Funktionalität erzielt wird.

Erfindungsgemäß wird diese Aufgabe durch die Merkmale von Anspruch 1 gelöst.

### Vorteile der Erfindung

Die Erfindung schlägt vor, dass die weitere Luftleiteinrichtung die eine Luftleiteinrichtung übergreifend zumindest teilweise überlappt. Dann ergibt sich eine verbesserte Führung der Luftströmung, wodurch deren Neigung zu Strömungsabrissen und Ausbildung turbulenter Strömung während der Umlenkung vom Dach des Fahrerhauses zum Aufbau wesentlich reduziert wird.

Durch die in den Unteransprüchen aufgeführten Maßnahmen sind vorteilhafte Weiterbildungen und Verbesserungen der im Patentanspruch 1 angegebenen Erfindung möglich.

Besonders bevorzugt erstreckt sich die weitere Luftleiteinrichtung quer zur Fahrtrichtung wenigstens über die Breite der Aussparung. Dies impliziert, dass auch die Dachluke von der weiteren Luftleiteinrichtung quer zur Fahrtrichtung vollständig überdeckt wird, da die Breite der Aussparung stets größer ist als die der Dachluke. Dann wird eine aerodynamisch ungünstige Unterströmung der Aussparung vermieden. Zur Erzielung eines günstigeren Strömungsverlaufs kann zusätzlich die Aussparung von der weiteren Luftleiteinrichtung in Fahrtrichtung zumindest teilweise überdeckt werden.

Wenn die weitere Luftleiteinrichtung die Dachluke in Fahrtrichtung zumindest teilweise überdeckt, wirkt sie als Sonnenschutz, Schutz vor Zugluft und auch als Regenschutz, wenn die Dachluke zur Zufuhr von Frischluft in die Fahrerkabine geöffnet ist.

Gemäß einer Fortbildung kann die weitere Luftleiteinrichtung zumindest im Bereich der Dachluke transparent ausgeführt sein und beispielsweise aus transparentem Polycarbonat bestehen. Dann wird der Einfall von Tageslicht in die Fahrerkabine nicht behindert, wenn die Dachluke als Sonnendach ausgebildet ist.

Nicht zuletzt kann die weitere Luftleiteinrichtung durch einen ein- oder mehrteiligen Luftleitflügel ausgebildet sein, der in seiner Länge und/oder in seiner Breite und/oder in seiner Neigung einstellbar ist.

Weitere Vorteile ergeben sich aus den in den weiteren Unteransprüchen angegebenen Merkmalen.

### Zeichnungen

Nachstehend ist ein Ausführungsbeispiel der Erfindung in den Zeichnungen dargestellt und in der nachfolgenden Beschreibung näher erläutert. In den Zeichnungen zeigt
- Fig.1: eine perspektivische Ansicht eines Nutzfahrzeugdachs mit Luftleiteinrichtungen gemäß einer bevorzugten Ausführungsform der Erfindung;
- Fig.2: einen Längsschnitt entlang der Linie II-II von Fig.1.

### Beschreibung des Ausführungsbeispiels

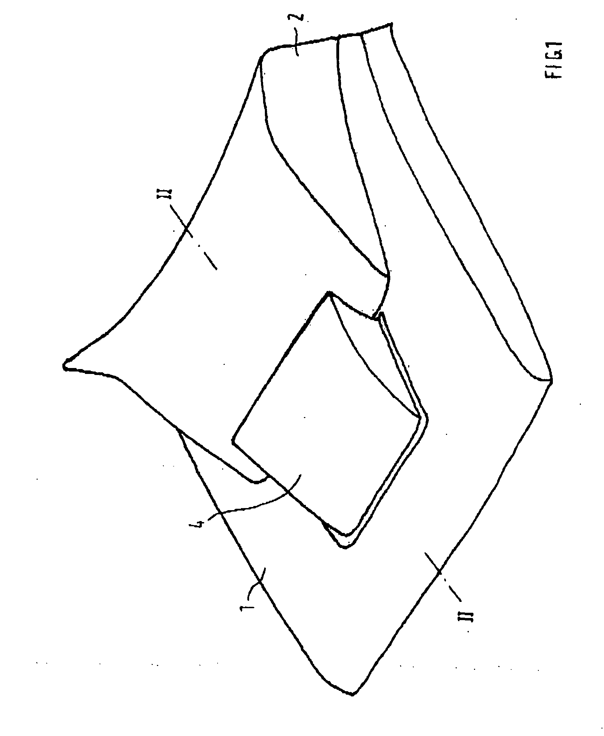

Von einem Nutzfahrzeug ist in Fig. 1 aus Maßstabsgründen lediglich ein Dach 1 eines Fahrerhauses gezeigt, auf welchem die luftleiteinrichtungen 2, 4 angeordnet sind. Bei dem Fahrerhaus kann es sich um ein Fahrerhaus eines Nutzfahrzeugs handeln, das ein Zugfahrzeug einer Zugfahrzeug-Auflieger-Kombination ist oder um ein Fahrerhaus eines Nutzfahrzeugs mit eigenen Aufbau.

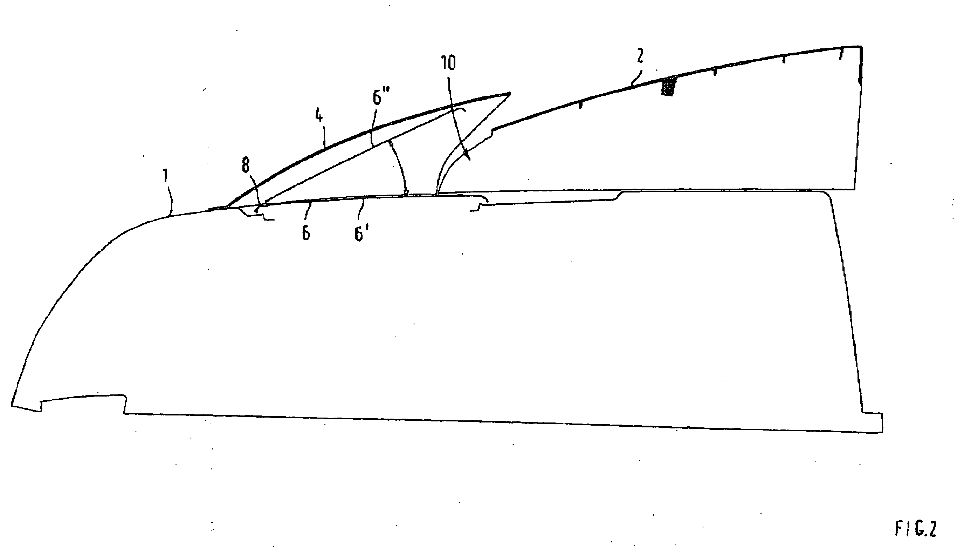

Wie aus Fig. 2 hervorgeht, ist eine vorzugsweise transparente Dachluke 6 vorhanden, welche gegenüber dem Dach 1 um eine in Fahrtrichtung gesehen an der vorderen Kante angeordneten Schwenkachse 8 bis zu einem bestimmten maximalen Winkel von der mit 6' gekennzeichneten Stellung in eine mit 6" gekennzeichnete Stellung ausgeklappt werden kann. Da die in Fahrrichtung gesehen hintere Luftleiteinrichtung 2, im folgenden Hauptdachspöiler genannt, in Fahrzeuglängsrichtung eine bestimmte Erstreckung aufweisen muss, um die Luftströmung ohne allzu große Umlenkung allmählich vom Dach 1 zu dem demgegenüber höheren Aufbau zu leiten, ist in dem sich nach oben und hinten schräg erstreckenden Hauptdachspoiler 2 eine Aussparung 10 vorgesehen, in welche die Dachluke 6 von unten her zumindest teilweise einklappen kann.

Je nach Lage der Dachluke 6 in Bezug zur Aussparung 10 kann letztere unterschiedlich groß sein und eine jeweils andere Erstreckung in Fahrtrichtung und quer dazu aufweisen. Im vorliegenden Fall ist die Aussparung 10 in Bezug zur Fahrzeuglängsachse mittig angeordnet und erstreckt sich quer zur Fahrtrichtung nur über einen zentralen Teil des Hauptdachspoilers 2. Weiterhin ist die Erstreckung der Aussparung 10 in Fahrtrichtung relativ klein, so dass sie nur einen vorderen Randbereich des Hauptdachspoilers 2 betrifft. Je nach Erfordernis, d.h. je nach relativer Lage von Hauptdachspoiler 2 und Dachluke 6 könnte die Aussparung 10 lm Hauptdachspoiler 2 jedoch auch eine größere Erstreckung in Fahrtrichtung und auch quer dazu aufweisen.

Um eine Anpassung an unterschiedliche Breiten von Dächern 1 und/oder an unterschiedliche Höhen von Aufbauten oder Aufliegern zu ermöglichen, könnte die Breite und/oder die Länge des Hauptdachspoilers 2 sowie seine Neigung relativ zum Dach 1 einstellbar ausgeführt sein.

Darüber hinaus ist eine weitere Luftleiteinrichtung 4 vorhanden, im folgenden Vordachspoiler genannt, die in Fahrtrichtung gesehen vor der Dachluke 6 und vor dem Hauptdachspoiler 2 auf dem Dach 1 angeordnet ist. Dies ist vorzugsweise dadurch realisiert, dass der Vordachspoiler 4 vor der Dachluke 6 und vor dem Hauptdachspoiler 2 auf dem Dach 1 befestigt ist.

Dieser Vordachspoiler 4 überlappt den Hauptdachspoiler 2 übergreifend zumindest teilweise. Wie hoch der Überlappungs- bzw. Überdeckungsgrad ist, hängt von der jeweiligen Geometrie des Vordachspoilers 4 und/oder des Hauptdachspoilers 2 ab. Entscheidend dabei ist die aerodynamische Qualität der Luftströmung entlang der beiden Luftleiteinrichturigen 2, 4, wobei eine Luftströmung in die Aussparung 10 vermieden werden soll.

Besonders bevorzugt erstreckt sich der Vordachspoiler 4 weiterhin quer zur Fahrtrichtung wenigstens über die Breite der Aussparung 10. Dies impliziert, dass auch die Dachluke 6 vom Vordachspoiler 4 quer zur Fahrtrichtung vollständig überdeckt wird, da die Breite der Aussparung 10 stets größer ist als die der Dachluke 6. Weiterhin überdeckt der Vordachspoiler 4 die Aussparung 10 in Fahrtrichtung zumindest teilweise. Im vorliegenden Fall ragt der Vordachspoiler 4 in Fahrtrichtung sogar über die Aussparung 10 ein Stück weit hinaus.

Darüber soll der Vordachspoiler 4 vorzugsweise auch die Dachluke 6 in Fahrtrichtung zumindest teilweise überdecken, im vorliegenden Fall vollständig und über die Dachluke 6 noch ein Stück hinaus ragen. Kriterien für den Überlappungs- bzw. Überdeckungsgrad des Vordachspoilers 4 mit der Dachluke 6 in Fahrtrichtung kann seine Eignung als Sonnenschutz, Schutz vor Zugluft und auch als Regenschutz sein, wenn die Dachluke 6 zur Zufuhr von Frischluft in die Fahrerkabine geöffnet ist. Der Fachmann passt den Überlappungs- bzw. Überdeckungsgrad des Vordachspoilers 4 in Bezug zur Dachluke 6 fallspezifisch an.

Um einen Einfall von Tageslicht in die Fahrerkabine über die beispielsweise als Sonnendach und daher transparente ausgeführte Dachluke 6 nicht zu behindern, kann der Vordachspoiler 4 zumindest im Bereich der Dachluke ebenfalls transparent ausgeführt sein und beispielsweise aus transparentem Polycarbonat bestehen.

Um eine Anpassung an unterschiedliche Breiten oder Höhen von Hauptdachspoilern 2 zu ermöglichen und um den Überlappungsgrad mit der Dachluke 6 bzw. mit der Aussparung 10 im Hauptdachspoiler 2 zu variieren, können die Breite des Vordachspoilers 4 quer zur Fahrtrichtung, seine Längserstreckung in Fahrtrichtung und/oder seine Neigung in Bezug zum Dach 1 einstellbar ausgeführt sein. Insbesondere kann der Vordachspoiler 4 hierzu mehrteilig ausgebildet sein.

Vorzugsweise sind der Hauptdachspoiler 2 und der Vordachspoiler 4 als voneinander getrennte und separate Bauteile bzw. Baugruppen gemäß Fig.1 und Fig.2 ausgebildet. Es ist jedoch leicht vorstellbar, dass gemäß einer weiteren Ausführungsform der Hauptdachspoiler 2 und der Vordachspoiler 4 miteinander verbunden oder einstückig ausgeführt sein können.

## Patentansprüche

1. Nutzfahrzeug mit einem Fahrerhaus, in dessen Dach (1) eine Dachluke (6) vorgesehen ist, mit einer sich vom Dach (1) aus nach oben und hinten schräg erstreckenden Luftleiteinrichtung (2) zur strömungsgünstigen Anströmung eines hinter dem Fahrerhaus angeordneten Aufbaus oder Aufliegers, wobei die Luftleiteinrichtung (2) mit einer Aussparung (10) für die Dachluke (6) versehen ist, sowie mit einer weiteren Luftleiteinrichtung (4), die in Fahrtrichtung vor der Dachluke (6) auf dem Dach (1) angeordnet ist **dadurch gekennzeichnet, dass** die weitere Luftleiteinrichtung (4) die eine Luftleiteinrichtung (2) übergreifend zumindest teilweise überlappt.

2. Nutzfahrzeug nach Anspruch 1, **dadurch gekennzeichnet, dass** die weitere Luftleiteinrichtung (4) sich quer zur Fahrtrichtung wenigstens über die Breite der Aussparung (10) erstreckt und diese in Fahrtrichtung zumindest teilweise überdeckt.

3. Nutzfahrzeug nach Anspruch 1 oder 2, **dadurch gekennzeichnet, dass** die weitere Luftleiteinrichtung (4) die Dachluke (6) in Fahrtrichtung zumindest teilsweise überdeckt.

4. Nutzfahrzeug nach Anspruch 3, **dadurch gekennzeichnet, dass** die weitere Luftleiteinrichtung (4) zumindest im Bereich der Dachluke (6) transparent ausgeführt ist.

5. Nutzfahrzeug nach wenigstens einem der vorhergehenden Ansprüche, **dadurch gekennzeichnet, dass** die weitere Luftleiteinrichtung (4) aus Polycarbonat besteht.

6. Nutzfahrzeug nach wenigstens einem der vorhergehenden Ansprüche, **dadurch gekennzeichnet, dass** die weitere Luftleiteinrichtung (4) durch einen ein- oder mehrteiligen Luftleitflügel gebildet wird, der bezogen auf seine Erstreckung In der Länge und/oder in der Breite und/oder in seiner Neigung einstellbar ist.

7. Nutzfahrzeug nach wenigstens einem der vorhergehenden Ansprüche, **dadurch gekennzeichnet, dass** die eine Luftleiteinrichtung (2) und die weitere Luftleiteinrichtung (4) als separat angeordnete Bauteile oder Baugruppen ausgebildet sind.

8. Nutzfahrzeug nach wenigstens einem der Anspruche 1 bis 5, **dadurch gekennzeichnet, dass** die eine Luftleiteinrichtung (2) und die weitere Luftleiteinrichtung (4) miteinander verbunden oder einstückig ausgebildet sind.

## Claims

1. Commercial vehicle with a cab, in the roof (1) of which a roof hatch (6) is provided, with an air deflector (2) that extends obliquely upwards and rearwards from the roof (1) for aerodynamically efficient air flow on to a body or semitrailer arranged behind the cab, the air deflector (2) being provided with a recess (10) for the roof hatch (6) as well as with an additional air deflector (4) that is arranged in the direction of travel ahead of the roof hatch (6) on the roof (1), **characterised in that** the additional air deflector (4) fits around and at least partly overlaps the first air deflector (2).

2. Commercial vehicle according to Claim 1, **characterised in that** the additional air deflector (4) extends crosswise to the direction of travel at least across the width of the recess (10) and at least partly covers said recess in the direction of travel.

3. Commercial vehicle according to Claim 1 or 2, **characterised in that** the additional air deflector (4) at least partly covers the roof hatch (6) in the direction of travel.

4. Commercial vehicle according to Claim 3, **characterised in that** the additional air deflector (4) is transparent at least in the area of the roof hatch (6).

5. Commercial vehicle according to at least one of the preceding Claims, **characterised in that** the additional air deflector (4) is made of polycarbonate.

6. Commercial vehicle according to at least one of the preceding Claims, **characterised in that** the additional air deflector (4) is formed by a single-piece or multi-piece air guide vane that is adjustable as regards its extension in terms of length and/or width and/or its inclination.

7. Commercial vehicle according to at least one of the preceding Claims, **characterised in that** the first air deflector (2) and the additional air deflector (4) are executed as separately arranged components or assemblies.

8. Commercial vehicle according to at least one of Claims 1 to 5, **characterised in that** the first air deflector (2) and the additional air deflector (4) are connected to each other or executed in one piece.

## Revendications

1. Véhicule industriel avec une cabine, dans le pavillon (1) de laquelle est prévue une trappe de pavillon (6), avec un dispositif déflecteur d'air (2) s'étendant de biais vers le haut et vers l'arrière à partir du pavillon, permettant d'assurer un écoulement favorable de l'air au niveau d'une carrosserie ou d'une semi-remorque disposée derrière la cabine, auquel cas le dispositif déflecteur d'air (2) présente un évidement (10) destiné à la trappe de pavillon (6), ainsi qu'avec un dispositif déflecteur d'air supplémentaire (4) disposé, dans le sens de la marche, sur le pavillon (1) devant la trappe de pavillon (6), **caractérisé en ce que** le dispositif déflecteur d'air supplémentaire (4) chevauche le dispositif déflecteur d'air (2) en le recouvrant au moins partiellement.

2. Véhicule industriel selon la revendication 1, **caractérisé en ce que** le dispositif déflecteur d'air supplémentaire (4) s'étend, transversalement par rapport au sens de la marche, au moins sur la largeur de l'évidement (10) et recouvre celui-ci au moins partiellement.

3. Véhicule industriel selon la revendication 1 ou 2, **caractérisé en ce que** le dispositif déflecteur d'air supplémentaire (4) recouvre la trappe de pavillon (6) au moins partiellement dans le sens de la marche.

4. Véhicule industriel selon la revendication 3, **caractérisé en ce que** le dispositif déflecteur d'air supplémentaire (4) est exécuté de manière transparente au moins dans la zone de la trappe de pavillon (6).

5. Véhicule industriel selon au moins une des revendications mentionnées précédemment, **caractérisé en ce que** le dispositif déflecteur d'air supplémentaire (4) est fabriqué en polycarbonate.

6. Véhicule industriel selon au moins une des revendications mentionnées précédemment, **caractérisé en ce que** le dispositif déflecteur d'air supplémentaire (4) est formé d'une aile déflectrice d'air composée d'une ou de plusieurs pièces, réglable au niveau de la longueur et/ou de la largeur et/ou de l'inclinaison en rapport avec son extension.

7. Véhicule industriel selon au moins l'une des revendications mentionnées précédemment, **caractérisé en ce que** le dispositif déflecteur d'air (2) et le dispositif déflecteur d'air supplémentaire (4) sont formés de pièces ou groupes de construction disposés séparément.

8. Véhicule industriel selon au moins une des revendications 1 à 5, **caractérisé en ce que** le dispositif déflecteur d'air (2) et le dispositif déflecteur d'air supplémentaire (4) sont reliés l'un à l'autre ou sont formés d'une seule et même pièce.
